# EUROPEAN PATENT APPLICATION

(11) **EP 4 106 388 A1**
(43) Date of publication of application: **21.12.2022**
(21) Application number: 20918608.9
(22) Date of filing: 14.02.2020
(51) Int. Cl.: H04W 24/10, H04W 72/04

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/005914
(87) International publication number: WO 2021/161544

(57) **Abstract**

A terminal according to an aspect of the present disclosure includes a receiving section that receives a medium access control-control element (MAC CE) indicating a transmission configuration indication (TCI) state or a reference signal of a path loss reference signal (PL-RS), and a control section that, when a specific uplink signal satisfies an application condition, uses the reference signal for path loss calculation of the specific uplink signal at timing later than positive acknowledgement (ACK) transmission for the MAC CE. According to an aspect of the present disclosure, a UL signal can be appropriately transmitted.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), the following has been under study: a user terminal (a terminal, a user terminal, a User Equipment (UE)) controls transmission and reception processing, based on information related to quasi-co-location (QCL).

However, it is not clear as to how to switch at least one of spatial relation and a path loss reference signal of an uplink signal, based on update of information related to QCL of a downlink signal. Unless the UE appropriately switches at least one of the spatial relation and the path loss reference signal, a UL signal cannot be appropriately transmitted, which may lead to deterioration of system performance such as deterioration of throughput.

In view of this, the present disclosure has one object to provide a terminal, a radio communication method, and a base station that appropriately transmits a UL signal.

### Solution to Problem

A terminal according to an aspect of the present disclosure includes a receiving section that receives a medium access control-control element (MAC CE) indicating a transmission configuration indication (TCI) state or a reference signal of a path loss reference signal (PL-RS), and a control section that, when a specific uplink signal satisfies an application condition, uses the reference signal for path loss calculation of the specific uplink signal at timing later than positive acknowledgement (ACK) transmission for the MAC CE.

### Advantageous Effects of Invention

According to an aspect of the present disclosure, a UL signal can be appropriately transmitted.

### Brief Description of Drawings

FIG. 1 is a diagram to show an example of measurement delay requirements in intra-frequency measurement;
FIGS. 2A and 2B are diagrams to show examples of the number of samples and a scaling factor in consideration of UE receive beam switching in L1-RSRP measurement;
FIGS. 3A and 3B are diagrams to show examples of an L1-RSRP measurement period based on an SSB;
FIGS. 4A and 4B are diagrams to show examples of the L1-RSRP measurement period based on a CSI-RS;
FIG. 5 is a diagram to show an example of update of spatial relation in Rel. 15;
FIG. 6 is a diagram to show an example of update of a PL-RS in Rel. 16;
FIG. 7 is a diagram to show an example of a timeline of switching of at least one of default spatial relation and a default PL-RS;
FIG. 8 is a diagram to show an example of a timeline of switching of the default PL-RS according to a seventh embodiment;
FIG. 9 is a diagram to show another example of the timeline of switching of the default PL-RS according to the seventh embodiment;
FIG. 10 is a diagram to show yet another example of the timeline of switching of the default PL-RS according to the seventh embodiment;
FIG. 11 is a diagram to show an example of a timeline of switching of the PL-RS according to an eighth embodiment;
FIG. 12 is a diagram to show another example of the timeline of switching of the PL-RS according to the eighth embodiment;
FIG. 13 is a diagram to show yet another example of the timeline of switching of the PL-RS according to the eighth embodiment;
FIG. 14 is a diagram to show an example of a schematic structure of a radio communication system according to one embodiment;
FIG. 15 is a diagram to show an example of a structure of a base station according to one embodiment;
FIG. 16 is a diagram to show an example of a structure of a user terminal according to one embodiment; and
FIG. 17 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which may be referred to as a signal/channel) based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have a different parameter(s) (or a parameter set(s)) that can be assumed to be the same, and such parameter(s) (which may be referred to as a QCL parameter(s)) are described below:
- QCL type A (QCL-A): the Doppler shift, the Doppler spread, the average delay, and the delay spread,
- QCL type B (QCL-B): the Doppler shift and the Doppler spread,
- QCL type C (QCL-C): the Doppler shift and the average delay, and
- QCL type D (QCL-D): the spatial reception parameter.

A case that the UE assumes that a certain control resource set (CORESET), a channel, or a reference signal is in a relationship of specific QCL (for example, the QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

The UE may receive configuration information (for example, PDSCH-Config or tci-StatesToAddModList) including a list of information elements of the TCI state by using higher layer signaling.

The information element ("TCI-state IE" of RRC) of the TCI state configured by using higher layer signaling may include a TCI state ID and one or a plurality of pieces of QCL information ("QCL-Info"). The QCL information may include at least one of information related to the RS to have a QCL relationship (RS relation information) and information indicating the QCL type (QCL type information). The RS relation information may include information such as an index of the RS (for example, an SSB index or a non-zero power CSI-RS (Non-Zero-Power (NZP) CSI-RS) resource ID (Identifier)), an index of a cell in which the RS is located, and an index of a Bandwidth Part (BWP) in which the RS is located.

In Rel-15 NR, as the TCI state of at least one of the PDCCH and the PDSCH, both of the RS of the QCL type A and the RS for the QCL type D, or only the RS for the QCL type A may be configured for the UE.

In a case where the TRS is configured as the RS for the QCL type A, unlike a demodulation reference signal (DMRS) for the PDCCH or the PDSCH, the TRS is assumed to be transmitted such that the same TRS is periodically transmitted for an extended period of time. The UE can measure the TRS and calculate the average delay, the delay spread, and the like.

In a case where, for the UE, the TRS is configured as the RS for the QCL type A, in the TCI state of the DMRS for the PDCCH or the PDSCH, the UE can assume that the DMRS for the PDCCH or the PDSCH is the same as the QCL type A parameters (the average delay, the delay spread, and the like) for the TRS. Thus, the type A parameters (the average delay, the delay spread, and the like) for the DMRS for the PDCCH or the PDSCH can be determined from measurement results for the TRS. When performing channel estimation for at least one of the PDCCH and the PDSCH, the UE can use the measurement results for the TRS to perform more accurate channel estimation.

In a case where the RS for the QCL type D is configured for the UE, the UE can use the RS for the QCL type D to determine the UE receive beam (spatial domain reception filter, and UE spatial domain reception filter).

The RS for QCL type X for the TCI state may mean the RS in the QCL type X relation with (the DMRS for) a certain channel/signal, and the RS may be referred to as a QCL source of the QCL type X for the TCI state.

### <TCI State for PDCCH>

Information related to the QCL between the PDCCH (or a DMRS antenna port related to the PDCCH) and a certain RS may be referred to as a TCI state for the PDCCH or the like.

The UE may determine the TCI state for a UE-specific PDCCH (CORESET), based on higher layer signaling. For example, one or a plurality (K) of TCI states may be configured for the UE for each CORESET by using RRC signaling.

For the UE, for each CORESET, one of the plurality of TCI states configured by using RRC signaling may be activated by using the MAC CE. The MAC CE may be referred to as a TCI state indication MAC CE for a UE-specific PDCCH (TCI State Indication for UE-specific PDCCH MAC CE). The UE may perform monitoring of the CORESET, based on an active TCI state corresponding to the

### CORESET.

### <TCI State for PDSCH>

Information related to the QCL between the PDSCH (or a DMRS antenna port related to the PDSCH) and a certain DL-RS may be referred to as a TCI state for the PDSCH or the like.

M (M ≥ 1) TCI states for the PDSCH (M pieces of QCL information for the PDSCH) may be notified (configured) for the UE by using higher layer signaling. Note that the number M of the TCI states configured for the UE may be restricted by at least one of UE capability and the QCL type.

The DCI used for scheduling of the PDSCH may include a field (which may be referred to as, for example, a TCI field, a TCI state field, or the like) indicating the TCI state for the PDSCH. The DCI may be used for scheduling of the PDSCH of one cell, and may be referred to as, for example, DL DCI, DL assignment, DCI format 1_0, DCI format 1_1, or the like.

Whether or not the TCI field is included in the DCI may be controlled with information reported from the base station to the UE. The information may be information (for example, TCI presence information, TCI presence information in DCI, higher layer parameter TCI-PresentInDCI) indicating whether the TCI field is present or absent in the DCI. The information may be, for example, configured for the UE using higher layer signaling.

When more than eight types of TCI states are configured for the UE, eight or less types of TCI states may be activated (or specified), using the MAC CE. The MAC CE may be referred to as a TCI state activation/deactivation MAC CE for a UE-specific PDSCH (TCI States Activation/Deactivation for UE-specific PDSCH MAC CE). The value of the TCI field in the DCI may indicate one of the TCI states activated using the MAC CE.

When the TCI presence information set as "enabled" is configured for the UE for the CORESET for scheduling the PDSCH (CORESET used for PDCCH transmission for scheduling the PDSCH), the UE may assume that the TCI field is present in DCI format 1_1 of the PDCCH transmitted on the CORESET.

In a case in which the TCI presence information is not configured for the CORESET for scheduling the PDSCH, or the PDSCH is scheduled by DCI format 1_0, when a time offset between reception of the DL DCI (DCI for scheduling the PDSCH) and reception of the PDSCH corresponding to the DCI is equal to or larger than a threshold, in order to determine the QCL of a PDSCH antenna port, the UE may assume that the TCI state or the QCL assumption for the PDSCH is the same as the TCI state or the QCL assumption applied to the CORESET used for PDCCH transmission for scheduling the PDSCH.

In a case in which the TCI presence information is set as "enabled," when the TCI field in the DCI in a component carrier (CC) for scheduling (the PDSCH) indicates an activated TCI state in the scheduled CC or the DL BWP, and the PDSCH is scheduled by DCI format 1_1, in order to determine the QCL of the PDSCH antenna port, the UE may use the TCI in accordance with the value of the TCI field in the detected PDCCH having the DCI. When the time offset between reception of the DL DCI (for scheduling the PDSCH) and the PDSCH corresponding to the DCI (PDSCH scheduled by the DCI) is equal to or larger than the threshold, the UE may assume that the DM-RS port of the PDSCH of the serving cell is quasi co-located (QCLed) with the RS in the TCI state related to a QCL type parameter given by the indicated TCI state.

When a single slot PDSCH is configured for the UE, the indicated TCI state may be based on the activated TCI state in the slot having the scheduled PDSCH. When a plurality of slot PDSCHs are configured for the UE, the indicated TCI state may be based on the activated TCI state in the first slot having the scheduled PDSCH, and the UE may expect that the TCI state is the same over the slots having the scheduled PDSCH. When the CORESET associated with a search space set for cross carrier scheduling is configured for the UE, the TCI presence information is set to "enabled" for the UE for the CORESET, and when at least one of the TCI states configured for the serving cell scheduled by the search space set includes the QCL type D, the UE may assume that the time offset between a detected PDCCH and the PDSCH corresponding to the PDCCH is equal to or larger than the threshold.

In both of the case in which the TCI information in DCI (higher layer parameter TCI-PresentInDCI) is set to "enabled" and the case in which the TCI information in DCI is not configured in an RRC connected mode, when the time offset between reception of the DL DCI (DCI for scheduling the PDSCH) and its corresponding PDSCH (PDSCH scheduled by the DCI) is less than the threshold, the UE may assume that the DM-RS port of the PDSCH of the serving cell has the minimum (lowest) CORESET-ID in the latest (most recent) slot in which one or more CORESETs in the active BWP of the serving cell are monitored by the UE, and is QCLed with the RS related to the QCL parameter used for QCL indication of the PDCCH of the CORESET associated with the monitored search space. The RS may be referred to as a default TCI state of the PDSCH or a default QCL assumption of the PDSCH.

The time offset between the reception of the DL DCI and the reception of the PDSCH corresponding to the DCI may be referred to as a scheduling offset.

The threshold may be referred to as time duration for QCL, a "timeDurationForQCL," a "Threshold," a "Threshold for offset between a DCI indicating a TCI state and a PDSCH scheduled by the DCI," a "Threshold-Sched-Offset," a schedule offset threshold, a scheduling offset threshold, or the like.

The time duration for QCL may be based on the UE capability, and may be, for example, based on a delay that is required for decoding of the PDCCH and beam switch. The time duration for QCL may be a minimum period of time that is required for the UE to perform PDCCH reception and application of spatial QCL information received in the DCI for PDSCH processing. The time duration for QCL may be represented by the number of symbols for each subcarrier spacing, or may be represented by time (for example, µs). Information of the time duration for QCL may be reported from the UE to the base station as UE capability information, or may be configured from the base station to the UE by using higher layer signaling.

For example, the UE may assume that a DMRS port of the PDSCH is QCLed with the DL-RS that is based on the TCI state activated for the CORESET corresponding to the minimum CORESET-ID. The latest slot may be, for example, a slot in which the DCI for scheduling the PDSCH is received.

Note that the CORESET-ID may be an ID configured by using an RRC information element "ControlResourceSet" (ID for identification of the CORESET, controlResourceSetId).

When not even one CORESET is configured for a CC, the default TCI state may be an activated TCI state having the lowest ID that can be applied to the PDSCH in the active DL BWP of the CC.

In Rel. 16 or later versions, in a case (cross carrier scheduling) in which the PDSCH and the PDCCH for scheduling the PDSCH are present in different component carriers (CCs), if delay from the PDCCH to the PDSCH (PDCCH-to-PDSCH delay) is shorter than the time duration for QCL, or when the TCI state is not present in the DCI for the scheduling, the UE may acquire QCL assumption for the PDSCH scheduled from the active TCI state that can be applied to the PDSCH in the active BWP of the scheduled cell and that has the lowest ID.

### <Spatial Relation for PUCCH>

For the UE, parameters (PUCCH configuration information, PUCCH-Config) used for PUCCH transmission may be configured by using higher layer signaling (for example, Radio Resource Control (RRC) signaling). The PUCCH configuration information may be configured for each partial band (for example, an uplink bandwidth part (BWP)) in a carrier (also referred to as a cell or a component carrier (CC)).

The PUCCH configuration information may include a list of pieces of PUCCH resource set information (for example, PUCCH-ResourceSet) and a list of pieces of PUCCH spatial relation information (for example, PUCCH-SpatialRelationInfo).

The PUCCH resource set information may include a list (for example, resourceList) of PUCCH resource indices (IDs, for example, PUCCH-ResourceId).

When the UE does not have dedicated PUCCH resource configuration information (for example, dedicated PUCCH resource configuration) provided by the PUCCH resource set information in the PUCCH configuration information (before an RRC setup), the UE may determine the PUCCH resource set, based on a parameter (for example, pucch-ResourceCommon) in system information (for example, System Information Block Type 1 (SIB1) or Remaining Minimum System Information (RMSI)). The PUCCH resource set may include 16 PUCCH resources.

On the other hand, when the UE has the dedicated PUCCH resource configuration information (UE-dedicated uplink control channel configuration, dedicated PUCCH resource configuration) (after an RRC setup), the UE may determine the PUCCH resource set, according to the number of UCI information bits.

The UE may determine one PUCCH resource (index) in the PUCCH resource set (for example, the PUCCH resource set determined to be specific to the cell or dedicated to the UE), based on at least one of a value of a field (for example, a PUCCH resource indication (PUCCH resource indicator) field) in downlink control information (DCI) (for example, DCI format 1_0 or 1_1 used for scheduling of the PDSCH), the number (N_{CCE}) of CCEs in the control resource set (CORESET) for PDCCH reception for carrying the DCI, and an index (n_{CCE,0}) of the head (first) CCE of the PDCCH reception.

The PUCCH spatial relation information (for example, "PUCCH-spatialRelationInfo" of an RRC information element) may indicate a plurality of candidate beams (spatial domain filters) for PUCCH transmission. The PUCCH spatial relation information may indicate a spatial relationship between the RS (Reference signal) and the

### PUCCH.

The list of pieces of PUCCH spatial relation information may include some elements (PUCCH spatial relation information IEs (Information Elements)). Each piece of PUCCH spatial relation information may include, for example, at least one of pieces of information related to an index (ID, for example, pucch-SpatialRelationInfoId) of the PUCCH spatial relation information, an index (ID, for example, servingCellId) of the serving cell, and an RS (reference RS) to be in spatial relation with the PUCCH.

For example, information related to the RS may be an SSB index, a CSI-RS index (for example, an NZP-CSI-RS resource configuration ID), or an SRS resource ID and an ID of the BWP. The SSB index, the CSI-RS index, and the SRS resource ID may be associated with at least one of a beam, a resource, and a port selected through measurement of a corresponding RS.

When more than one piece of spatial relation information related to the PUCCH is configured for the UE, the UE may perform control so that one piece of PUCCH spatial relation information is active for one PUCCH resource at certain time, based on a PUCCH spatial relation activation/deactivation MAC CE.

The PUCCH spatial relation activation/deactivation MAC CE according to Rel-15 NR is expressed with a total of three octets (8 bits × 3 = 24 bits) of octets (Oct) 1 to 3.

The MAC CE may include information of a serving cell ID ("Serving Cell ID" field) of an application target, a BWP ID ("BWP ID" field), a PUCCH resource ID ("PUCCH Resource ID" field), and the like.

The MAC CE includes a field of "Sᵢ" (i = 0 to 7). When the field of certain Sᵢ indicates 1, the UE activates the spatial relation information of spatial relation information ID #i. When the field of certain Sᵢ indicates 0, the UE deactivates the spatial relation information of spatial relation information ID #i.

After 3 ms has passed since the UE has transmitted a positive acknowledgement (ACK) for the MAC CE for activating PUCCH spatial relation information, the UE may activate the PUCCH relation information specified by the MAC CE.

### <Spatial Relation for SRS and PUSCH>

The UE may receive information (SRS configuration information, for example, a parameter in "SRS-Config" of the RRC control element) that is used for transmission of a reference signal for measurement (for example, a sounding reference signal (SRS)).

Specifically, the UE may receive at least one of information related to one or a plurality of SRS resource sets (SRS resource set information, for example, "SRS-ResourceSet" of the RRC control element) and information related to one or a plurality of SRS resources (SRS resource information, for example, "SRS-Resource" of the RRC control element).

One SRS resource set may be related to some SRS resources (some SRS resources may be grouped together). Each SRS resource may be identified by an SRS resource identifier (SRS Resource Indicator (SRI)) or an SRS resource ID (Identifier).

The SRS resource set information may include information of an SRS resource set ID (SRS-ResourceSetId), a list of SRS resource IDs (SRS-ResourceId) used in the resource set, an SRS resource type, and usage of the SRS.

Here, the SRS resource type may indicate any one of a periodic SRS (P-SRS), a semi-persistent SRS (SP-SRS), and an aperiodic SRS (A-SRS or AP-SRS). Note that the UE may periodically (or periodically after activation) transmit the P-SRS and the SP-SRS, and transmit the A-SRS, based on an SRS request of the DCI.

The usage ("usage" of the RRC parameter, "SRS-SetUse" of an L1 (Layer-1) parameter) may be, for example, beam management (beamManagement), codebook-based transmission (codebook (CB)), non-codebook-based transmission (nonCodebook (NCB)), antenna switching (antennaSwitching), or the like. The SRS of the usage of codebook-based transmission or non-codebook-based transmission may be used for determination of a precoder of codebook-based or non-codebook-based PUSCH transmission based on the SRI.

For example, in a case of codebook-based transmission, the UE may determine a precoder for PUSCH transmission, based on the SRI, a transmitted rank indicator (TRI), and a transmitted precoding matrix indicator (TPMI). In a case of non-codebook-based transmission, the UE may determine a precoder for PUSCH transmission, based on the SRI.

The SRS resource information may include an SRS resource ID (SRS-ResourceId), the number of SRS ports, an SRS port number, transmission Comb, SRS resource mapping (for example, time and/or frequency resource position, a resource offset, a period of resources, the number of repetitions, the number of SRS symbols, an SRS bandwidth, or the like), hopping related information, an SRS resource type, a sequence ID, spatial relation information of the SRS, or the like.

The spatial relation information (for example, "spatialRelationInfo" of an RRC information element) of the SRS may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the reference signal.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The spatial relation information of the SRS may include a serving cell index, a BWP index (BWP ID), or the like corresponding to the reference signal.

In NR, transmission of an uplink signal may be controlled based on whether or not there is beam correspondence (BC). BC may be, for example, capability of a certain node (for example, the base station or the UE) of determining a beam (transmit beam, Tx beam) used for transmission of a signal, based on a beam (receive beam, Rx beam) used for reception of a signal.

Note that BC may be referred to as transmit/receive beam correspondence (Tx/Rx beam correspondence), beam reciprocity, beam calibration, calibrated/non-calibrated, reciprocity calibrated/non-calibrated, a correspondence degree, a matching degree, or the like.

For example, in a case without BC, the UE may transmit an uplink signal (for example, the PUSCH, the PUCCH, the SRS, or the like) by using the same beam (spatial domain transmission filter) as the SRS (or the SRS resource) indicated by the base station based on measurement results of one or more SRSs (or SRS resources).

On the other hand, in a case with BC, the UE may transmit an uplink signal (for example, the PUSCH, the PUCCH, the SRS, or the like) by using a beam (spatial domain transmission filter) the same as or corresponding to a beam (spatial domain reception filter) used for reception of an SSB or a CSI-RS (or CSI-RS resources).

When, regarding a certain SRS resource, the spatial relation information related to the SSB or the CSI-RS and the SRS is configured for the UE (for example, in a case with BC), the UE may transmit the SRS resource by using a spatial domain filter (spatial domain transmission filter) the same as the spatial domain filter (spatial domain reception filter) for reception of the SSB or the CSI-RS. In this case, the UE may assume that the UE receive beam of the SSB or the CSI-RS and the UE transmit beam of the SRS are the same.

When, regarding a certain SRS (target SRS) resource, the spatial relation information related to another SRS (reference SRS) and the SRS (target SRS) is configured for the UE (for example, in a case without BC), the UE may transmit the target SRS resource by using a spatial domain filter (spatial domain transmission filter) the same as the spatial domain filter (spatial domain transmission filter) for transmission of the reference SRS. In other words, in this case, the UE may assume that the UE transmit beam of the reference SRS and the UE transmit beam of the target SRS are the same.

Based on a value of a field (for example, an SRS resource identifier (SRI) field) in DCI (for example, DCI format 0_1), the UE may determine spatial relation of the PUSCH scheduled by the DCI. Specifically, the UE may use, for PUSCH transmission, the spatial relation information (for example, "spatialRelationInfo" of an RRC information element) of the SRS resource determined based on a value (for example, the SRI) of the field.

When codebook-based transmission is used for the PUSCH, for the UE, two SRS resources may be configured by RRC, and one of the two SRS resources may be indicated by DCI (a field of 1 bit). When non-codebook-based transmission is used for the PUSCH, for the UE, four SRS resources may be configured by RRC, and one of the four SRS resources may be indicated by DCI (a field of 2 bits). To use spatial relation other than the spatial relation of two or four configured by RRC, RRC reconfiguration is required.

Note that the DL-RS can be configured for the spatial relation of the SRS resources used for the PUSCH. For example, regarding the SP-SRS, for the UE, spatial relation of a plurality of (for example, up to 16) SRS resources can be configured by RRC, and one of the plurality of SRS resources can be indicated by the MAC CE.

### (Path Loss RS)

Path loss PL_{b,f,c} (q_{d}) [dB] in transmit power control of each of the PUSCH, the PUCCH, and the SRS is calculated by the UE by using an index q_{d} of a reference signal (an RS, a path loss reference RS (PathlossReferenceRS)) for a downlink BWP associated with an active UL BWP b of a carrier f of a serving cell c. In the present disclosure, a path loss reference RS, a path loss (PL)-RS, an index q_{d}, an RS used for path loss calculation, and an RS resource used for path loss calculation may be interchangeably interpreted. In the present disclosure, calculation, estimation, measurement, and tracking (track) may be interchangeably interpreted.

When the path loss RS is updated by the MAC CE, whether or not to change an existing mechanism of higher layer filtered RSRP for path loss measurement is under study.

When the path loss RS is updated by the MAC CE, path loss measurement based on L1-RSRP may be applied. At available timing after the MAC CE for update of the path loss RS, the higher layer filtered RSRP may be used for path loss measurement, and L1-RSRP may be used for path loss measurement before the higher layer filtered RSRP is applied. At available timing after the MAC CE for update of the path loss RS, the higher layer filtered RSRP may be used for path loss measurement, and the higher layer filtered RSRP of the previous path loss RS may be used before the timing. Similarly to the operation of Rel. 15, the higher layer filtered RSRP may be used for path loss measurement, and the UE may track all of the path loss RS candidates configured by RRC. The maximum number of path loss RSs that can be configured by RRC may depend on the UE capability. When the maximum number of the path loss RSs that can be configured by RRC is X, X or less path loss RS candidates may be configured by RRC, and the path loss RS may be selected by the MAC CE among the configured path loss RS candidates. The maximum number of path loss RSs that can be configured by RRC may be 4, 8, 16, 64, or the like.

In the present disclosure, higher layer filtered RSRP, filtered RSRP, and layer 3 filtered RSRP may be interchangeably interpreted.

### (Measurement Delay Requirements)

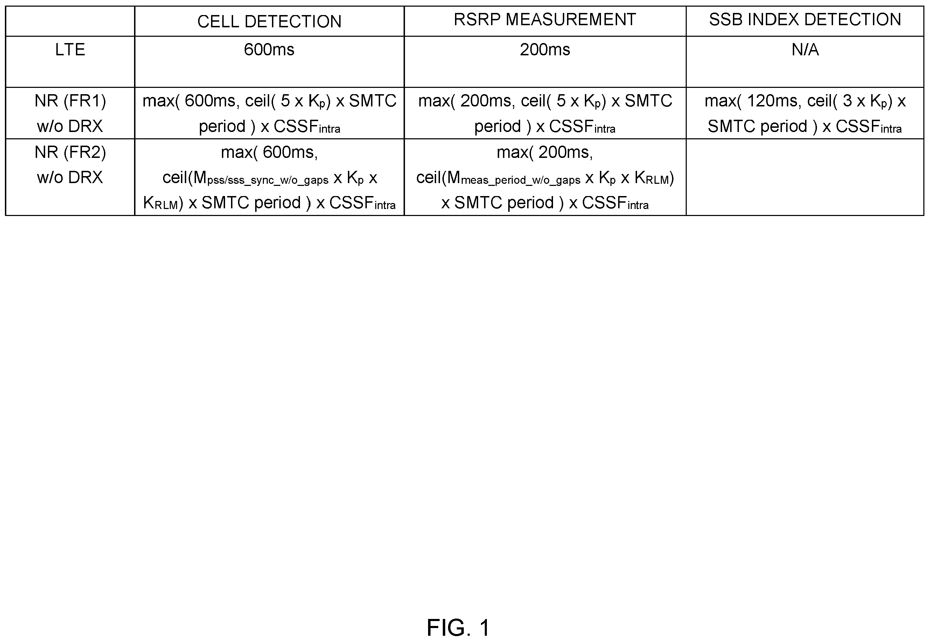

For radio resource management (RRM) measurement for layer 3 (L3) mobility, requirements for measurement delay for intra-frequency measurement are defined. As shown in FIG. 1, measurement delay requirements are defined for each of cell detection, RSRP measurement, and SSB index detection.

Here, M_{pss/sss_sync_w/o_gaps} is 40 for the UE that supports FR2 power class 1, 24 for the UE that supports power class 2, 24 for the UE that supports FR2 power class 3, and 24 for the UE that supports FR2 power class 4. M_{meas_period_w/o_gaps} is 40 for the UE that supports power class 1, 24 for the UE that supports FR2 power class 2, 24 for the UE that supports power class 3, and 24 for the UE that supports power class 4. When intra-frequency SSB measurement timing configuration (SMTC) does not completely overlap with a measurement gap (MG), or when intra-frequency SMTC completely overlaps with the MG, Kₚ = 1. When the intra-frequency SMTC partially overlaps with the MG, with the use of a measurement gap repetition period (MGRP), Kₚ = 1/(1 - (SMTC period/MGRP)), and SMTC period < MGRP. K_{RLM} (K_{layer1_measurement}) is 1 or 1.5, depending on a relationship between radio link monitoring (RLM), beam failure detection (BFD), candidate beam detection (CBD), or all of the reference signals configured for L1-RSRP for a beam report outside the MG and an intra-frequency SMTC occasion. CSSFᵢₙₜᵣₐ is a carrier-specific scaling factor.

When DRX is used and a DRX cycle is 320 ms or less, the inside of the ceil function is multiplied by 1.5, in consideration of misalignment of DRX on duration and an SMTC window.

In LTE, measurement can be constantly performed using a CRS, and thus the measurement delay requirement is as follows: 600 ms of cell detection and synchronization + 200 ms of RSRP measurement = fixed value of 800 ms. In NR, in order to avoid unnecessarily highly frequent measurement from the viewpoint of reduction of power consumption of the UE, 600 ms of cell detection of LTE and 200 ms of RSRP measurement of LTE are defined as the lower limit value. In NR, the SMTC period can be configured, and thus the measurement delay requirement according to the SMTC period is applied.

### (L1-RSRP Measurement/Report)

The UE measures a value of layer 1 (L1)-RSRP for each RS (each base station transmit beam) configured by RRC.

For each report of L1-RSRP, a measurement period indicating within how many preceding samples L1-RSRP measurement needs to be completed is defined. When the number of samples used for RSRP measurement for one L1-RSRP report is represented by M, a scaling factor in consideration of overlapping with the SMTC or the measurement gap (MG) is represented by P, a scaling factor in consideration of switch of the UE receive beam is represented by N, and a transmission period of the SSB or the CSI-RS is represented by an RS transmission period, a measurement period T in FR1 is expressed by M × P × RS transmission period, and a measurement period T in FR2 is expressed by M × N × P × RS transmission period.

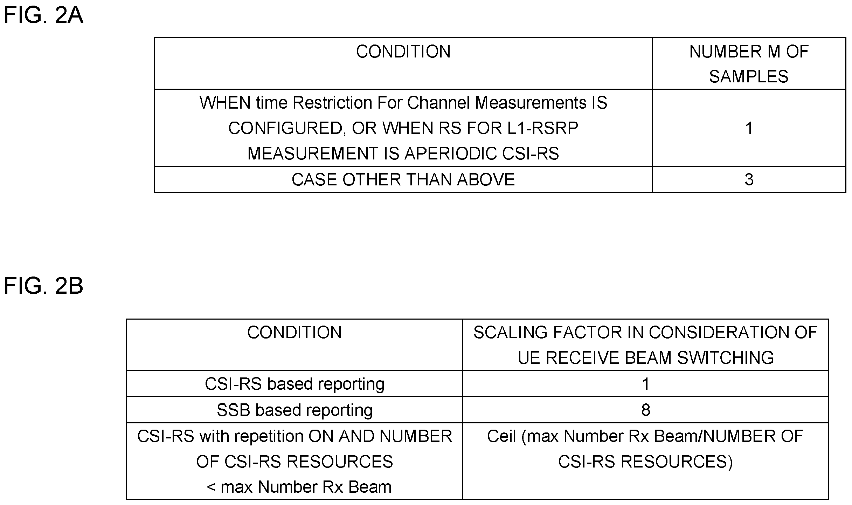

Here, as shown in FIG. 2A, when time domain measurement restriction for channel (signal) measurement (timeRestrictionForChannelMeasurements) is configured, or when the RS for L1-RSRP measurement is an aperiodic CSI-RS, M = 1, or otherwise M = 3. As shown in FIG. 2B, when the L1-RSRP report is based on the CSI-RS, N = 1, when the L1-RSRP report is based on the SSB, N = 8, and when the L1-RSRP report is based on a repeated CSI-RS and the number of CSI-RS resources is smaller than the maximum number of receive beams (maxNumberRxBeam), N = ceil(maxNumberRxBeam/number of CSI-RS resources).

Measurement accuracy of L1-RSRP based on one sample measurement is defined. Whether or not RSRP in L1 is averaged may depend on UE implementation. When the time domain measurement restriction for channel measurement is configured, the UE reports one sample of RSRP as L1-RSRP measurement results, without using averaging.

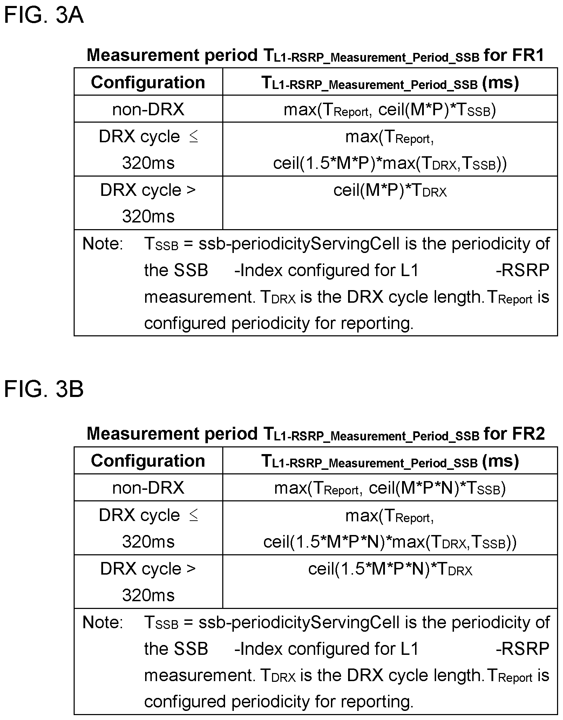

FIG. 3A shows an L1-RSRP measurement period T_{L1-RSRP_Measurement_Period_SSB} based on the SSB for FR1. FIG. 3B shows an L1-RSRP measurement period T_{L1-RSRP_Measurement_Period_SSB} based on the SSB for FR2. Here, T_{SSB} = ssb-periodicityServingCell is a period of the SSB index configured for L1-RSRP measurement. T_{DRX} is a DRX cycle length. T_{Report} is a period configured for a report.

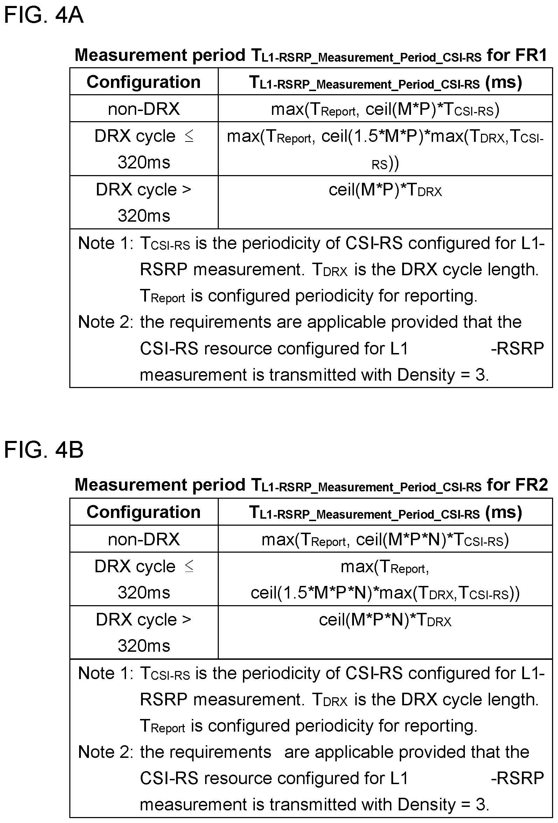

FIG. 4A shows an L1-RSRP measurement period T_{L1-RSRP_Measurement_Period_CSI-RS} based on the CSI-RS for FR1. FIG. 4B shows the L1-RSRP measurement period T_{L1-RSRP_Measurement_Period_CSI-RS} based on the CSI-RS for FR2. T_{CSI-RS} is a period of the CSI-RS configured for L1-RSRP measurement. This requirement can be applied to a case in which the CSI-RS configured for L1-RSRP measurement is transmitted with Density = 3.

### (Default Spatial Relation and Default PL-RS)

In Rel. 15, individual MAC CEs for the MAC CE for activation/deactivation of PUCCH spatial relation and the MAC CE for activation/deactivation of SRS spatial relation are needed. The PUSCH spatial relation follows the SRS spatial relation.

In Rel. 16, at least one of the MAC CE for activation/deactivation of PUCCH spatial relation and the MAC CE for activation/deactivation of SRS spatial relation need not be used.

When both of the spatial relation and the PL-RS for the PUCCH are not configured in FR2, default assumption of the spatial relation and the PL-RS (default spatial relation and default PL-RS) is applied to the PUCCH. When both of the spatial relation and the PL-RS for the SRS are not configured in FR2, default assumption of the spatial relation and the PL-RS (default spatial relation and default PL-RS) is applied to the PUSCH and the SRS scheduled by DCI format 0_1.

When a CORESET is configured for the active DL BWP on a CC, the default spatial relation and the default PL-RS may be the TCI state or the QCL assumption of the CORESET having the lowest CORESET ID in the active DL BWP. When the CORESET is not configured for the active DL BWP on the CC, the default spatial relation and the default PL-RS may be the active TCI state having the lowest ID of the PDSCH in the active DL BWP.

In Rel. 15, the spatial relation of the PUSCH scheduled by DCI format 0_0 follows the spatial relation of the PUCCH resource having the lowest PUCCH resource ID out of the active spatial relation of the PUCCH on the same CC. Even if the PUCCH is not transmitted on the SCell, the network needs to update the PUCCH spatial relation on all of the SCells.

In Rel. 16, the PUCCH configuration for the PUSCH scheduled by DCI format 0_0 is not necessary. The default spatial relation and the default PL-RS are applied to the PUSCH scheduled by DCI format 0_0.

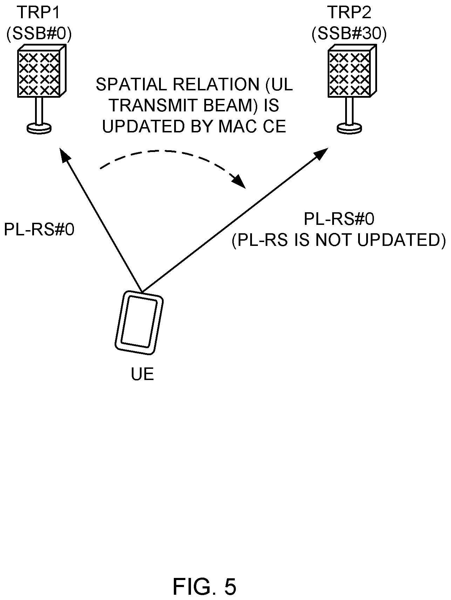

For accurate path loss measurement for transmit power control, for the UE of Rel. 15, up to 4 PL-RSs are configured by RRC signaling. As shown in FIG. 5, even when the UL transmit beam (spatial relation) is updated by the MAC CE, the PL-RS cannot be updated by the MAC CE.

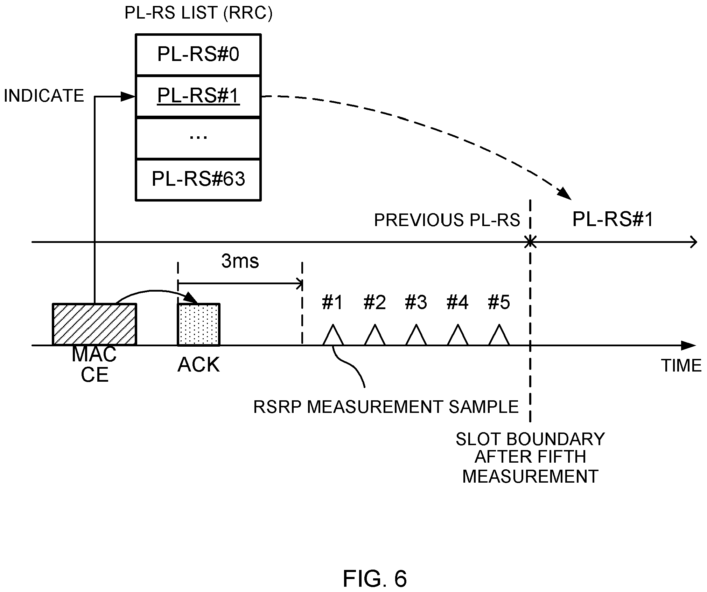

As shown in FIG. 6, for the UE of Rel. 16, up to 64 PL-RSs are configured by RRC signaling, and one PL-RS is indicated (activated) by the MAC CE. The UE is required to track up to 4 active PL-RSs for all of the UL channels (the SRS, the PUCCH, and the PUSCH). To track the PL-RS may be to calculate path loss based on measurement of the PL-RS and retain (store) the path loss.

For path loss calculation, the higher layer filtered RSRP (the average of a plurality of times of RSRP measurement) is used. As shown in FIG. 6, when the PL-RS is updated by the MAC CE (when PL-RS #1 different from the PL-RS (previous PL-RS) used for path loss calculation out of a PL-RS list configured by RRC is indicated by the MAC CE), PL-RS #1 may be applied to a slot boundary after the fifth RSRP measurement sample (may be used for path loss calculation), with the first RSRP measurement instance after elapse of 3 ms since transmission of an ACK for the MAC CE as the first RSRP measurement sample.

In the present disclosure, RSRP measurement, an RSRP measurement sample, an RSRP measurement resource, RSRP measurement timing, an RSRP measurement instance, a PL-RS measurement sample, a PL-RS measurement resource, PL-RS measurement, PL-RS measurement timing, and a PL-RS measurement instance may be interchangeably interpreted.

When the TCI state for the PDCCH or the PDSCH is updated by the MAC CE, the PL-RS is also updated by the TCI state. When the UE applies the default spatial relation and the default PL-RS, how to apply the updated PL-RS is not made clear. Measurement for the higher layer filtered RSRP requires time, and thus the updated PL-RS cannot be applied immediately after update of the TCI state.

### (DL Receive Beam Management)

The UE may be configured with one or more TCI states on the serving cell. The UE completes switching of the active TCI state within delay time. When the active TCI state is updated by the MAC CE, from when the updated TCI state (target TCI state) is applied (how much length the delay time has) depends on whether or not the target TCI state is known (measured). When the target TCI is unknown (not measured), the UE may apply the target TCI state after the time when the target TCI becomes known.

When the following plurality of known conditions for the TCI state (known conditions for TCI state, conditions for the TCI state to be considered as known) are satisfied, the target TCI state is known.
- In a period (TCI switching period) from the last transmission of the RS resource used for an L1-RSRP measurement report for the target TCI state to completion of the active TCI state switching, the RS resource for L1-RSRP measurement is an RS in the target TCI state or an RS QCLed with the target TCI state.
- In the TCI switching period, a TCI state switching command is received within 1280 ms from the last transmission of the RS resource for report or measurement of a beam.
- In the TCI switching period, the UE transmitted at least one L1-RSRP report for the target TCI state before the TCI state switching command.
- In the TCI switching period, the target TCI state is detectable.
- In the TCI switching period, the SSB associated with the target TCI state is detectable.
- In the TCI switching period, a signal-to-noise ratio (SNR) of the target TCI state is -3 dB or higher.

When the plurality of known conditions for the TCI state are not satisfied, the target TCI state is unknown.

If the target TCI state is known, the UE can receive the PDCCH having the target TCI state of the serving cell in which the TCI state switching occurs before slot n + T_{HARQ} + (3 ms + TOₖ * (T_{first-SSB} + T_{SSB-proc})) /NR slot length in response to reception of the PDSCH carrying a MAC CE activation command in slot n. The UE can receive the PDCCH having an old (pre-update) TCI state up to slot n + T_{HARQ} + (3 ms + TOₖ * (T_{first-SSB}))/NR slot length.

Here, T_{HARQ} is time between DL data transmission and a positive acknowledgement (acknowledgement). T_{first-SSB} is time from when a MAC CE command is decoded by the UE to first SSC transmission. T_{SSB-proc} is 2 ms. TOₖ is 1 when the target TCI state is not in an active TCI state list for the PDSCH, and is 0 otherwise.

When the target TCI state is unknown, the UE can receive the PDCCH having the target TCI state of the serving cell in which the TCI state switching occurs before slot n + T_{HARQ} + (3 ms + T_{L1-RSRP} + TOᵤₖ * (T_{first-SSB} + T_{SSB-proc}))/NR slot length in response to reception of the PDSCH carrying the MAC CE activation command in slot n. The UE can receive the PDCCH having an old (pre-update) TCI state up to slot n + T_{HARQ} + (3 ms + T_{L1-RSRP} + TOᵤₖ * (T_{first-SSB}))/NR slot length.

Here, T_{L1-RSRP} is time for L1-RSRP measurement for improving the receive beam. T_{L1-RSRP} for the SSB is T_{L1-RSRP_Measurement_Period_SSB} when M = 1 and T_{Report} = 0. T_{L1-RSRP} for the _{CSI-RS} is T_{L1-RSRP_Measurement_Period_CSI-RS} when M = 1 and T_{Report} = 0 for a periodic CSI-RS and an aperiodic CSI-RS when the number of resources in a resource set is at least equal to MaxNumberRxBeam. TOᵤₖ is 1 for CSI-RS-based L1-RSRP measurement, and is 0 for SSB-based L1-RSRP measurement when the TCI state switching includes the QCL type D. TOᵤₖ is 1 when the TCI state switching includes another QCL type. When the TCI state switching includes only the QCL type A, the QCL type B, or the QCL type C, for the SSB in FR2, T_{L1-RSRP_Measurement_Period_SSB} = 0, and T_{L1-RSRP_Measurement_Period_CSI-RS} = 0 in FR2. When the TCI state switching includes the QCL type D, T_{first-SSB} is time up to first SSB measurement after L1-RSRP measurement. For another QCLtype, T_{first-SSB} is time up to first SSC transmission after the MAC CE command is decoded by the UE. For the target TCI state, the SSB is the QCL type A or the QCL type C.

Switching timing to the target TCI state when the target TCI state is unknown may be timing obtained by adding T_{L1-RSRP} to switching timing to the target TCI state when the target TCI state is known.

When the TCI state for the PDCCH or the PDSCH is updated by the MAC CE, it is preferable that the UE that applies the default spatial relation adapt the default spatial relation to the updated TCI state. However, a timeline for switching the default spatial relation is not made clear. When the TCI state updated by the MAC CE is unknown, how to switch the default spatial relation is not made clear.

In view of this, the inventors of the present invention came up with the idea of a method of appropriately switching the default spatial relation according to update of the TCI state based on the MAC CE.

Embodiments according to the present disclosure will be described in detail below with reference to the drawings. Radio communication methods according to respective embodiments may be individually applied, or may be applied in combination.

In the present disclosure, "A/B" and "at least one of A and B" may be interchangeably interpreted. In the present disclosure, a cell, a CC, a carrier, a BWP, and a band may be interchangeably interpreted. In the present disclosure, an index, an ID, an indicator, and a resource ID may be interchangeably interpreted. In the present disclosure, an RRC parameter, a higher layer parameter, an RRC information element (IE), and an RRC message may be interchangeably interpreted.

In the present disclosure, a TCI state, QCL assumption, a QCL parameter, a spatial domain reception filter, a UE spatial domain reception filter, a UE receive beam, a DL receive beam, DL precoding, a DL precoder, a DL-RS, an RS of the QCL type D of the TCI state or the QCL assumption, and an RS of the QCL type A of the TCI state or the QCL assumption may be interchangeably interpreted. In the present disclosure, an RS of the QCL type D, a DL-RS associated with the QCL type D, a DL-RS having the QCL type D, a source of a DL-RS, an SSB, and a CSI-RS may be interchangeably interpreted.

In the present disclosure, spatial relation, spatial relation information, spatial relation assumption, a QCL parameter, a spatial domain transmission filter, a UE spatial domain transmission filter, a UE transmit beam, a UL transmit beam, UL precoding, a UL precoder, an RS of spatial relation, a DL-RS, QCL assumption, an SRI, spatial relation based on an SRI, and a UL TCI may be interchangeably interpreted.

In the present disclosure, a TRS, a CSI-RS for tracking, a CSI-RS having TRS information (higher layer parameter trs-Info), and an NZP-CSI-RS resource in an NZP-CSI-RS resource set having TRS information may be interchangeably interpreted.

In the present disclosure, DCI format 0_0, DCI not including an SRI, DCI not including an indication of spatial relation, and DCI not including a CIF may be interchangeably interpreted. In the present disclosure, DCI format 0_1, DCI including an SRI, DCI including an indication of spatial relation, and DCI including a CIF may be interchangeably interpreted.

In the present disclosure, a dedicated PUCCH and a PUCCH based on a dedicated PUCCH configuration (PUCCH-Config) may be interchangeably interpreted. In the present disclosure, a dedicated SRS and an SRS based on a dedicated SRS configuration (SRS-Config) may be interchangeably interpreted.

### (Radio Communication Method)

In the present disclosure, a specific UL signal and a UL signal of a specific type may be interchangeably interpreted. The specific UL signal may be at least one of a PUCCH (a dedicated PUCCH), an SRS (a dedicated SRS), a PUSCH scheduled by DCI format 0_1, and a PUSCH scheduled by DCI format 0_0.

In the present disclosure, a specific DL signal, a DL signal of a specific type, a specific DL channel, and a DL channel of a specific type may be interchangeably interpreted. The specific DL signal may be at least one of a PDCCH, a PDSCH, and a CORESET.

In the present disclosure, a TCI state updated by the MAC CE, a TCI state activated by the MAC CE, a TCI state indicated by the MAC CE, a target TCI state, a TCI state of a PL-RS activated by the MAC CE, and a TCI state referred to by at least one of the default spatial relation and the default PL-RS of the specific UL signal may be interchangeably interpreted. In the present disclosure, 3 ms may also be interpreted as specific time. The specific time need not be 3 ms. The specific time may be defined in a specification, may be configured by an RRC parameter, or may be a value reported by UE capability information. In the present disclosure, the number N of measurement samples may be defined in a specification, may be configured by the RRC parameter, or may be a value reported by the UE capability information. N may or may not be 5.

When the specific UL signal satisfies an application condition, and the TCI state of the specific DL signal is updated by the MAC CE, at least one of the default spatial relation and the default PL-RS of the specific UL signal may be switched to the target TCI state in accordance with a specific timeline.

The application condition may require at least one of "frequency of the specific UL signal is within a specific frequency range (FR)," "a specific higher layer parameter corresponding to the specific UL signal is configured," "a specific UL signal condition corresponding to the specific UL signal is satisfied," and "the target TCI state is known."

The specific frequency range may be FR2, or may be other than FR1.

The specific higher layer parameter may correspond to the specific UL signal. When the specific UL signal is the PUSCH scheduled by DCI format 0_0, a corresponding specific higher layer parameter may be default beam path loss enable information (enableDefaultBeamPlForPUSCH0_0). When the specific UL signal is the dedicated PUCCH, a corresponding specific higher layer parameter may be default beam path loss enable information (enableDefaultBeamPlForPUCCH). When the specific UL signal is at least one of the dedicated SRS and the PUSCH scheduled by DCI format 0_1, a corresponding specific higher layer parameter may be default beam path loss enable information (enableDefaultBeamPlForSRS) .

A combination of the specific UL signal and its corresponding specific UL signal condition may be at least one of the following specific UL signals 1 to 4.

### {Specific UL Signal 1}

The specific UL signal is the dedicated PUCCH. The specific UL signal condition is that both of the spatial relation and the PL-RS are not configured for the specific UL signal.

### {Specific UL Signal 2}

The specific UL signal is the dedicated SRS. The specific UL signal condition is that both of the spatial relation and the PL-RS are not configured for the specific UL signal.

### {Specific UL Signal 3}

The specific UL signal is the PUSCH scheduled by DCI format 0_0. The specific UL signal condition is that, for the specific UL signal, there is no PUCCH resource configuration on an active UL BWP, or there is no active spatial relation on the PUCCH resource on the active UL BWP.

### {Specific UL Signal 4}

The specific UL signal is the PUSCH scheduled by DCI format 0_1. The specific UL signal condition is that a corresponding SRS resource (an SRS resource indicated by an SRI) does not include the spatial relation and the PL-RS for the specific UL signal.

When the CORESET is configured in the active DL BWP on the CC of the specific UL signal, the specific DL signal may be the PDCCH. When the CORESET is not configured in the active DL BWP on the CC of the specific UL signal, the specific DL signal may be the PDSCH.

### <First Embodiment>

When the application condition is satisfied and the TCI state of the specific DL signal is updated by the MAC CE, at least one of the default spatial relation and the default PL-RS for the specific UL signal may be switched in accordance with a specific timeline. The specific timeline may follow any one of the following timelines 1 and 2.

### {Timeline 1}

The timeline of switching of the default spatial relation may be the same as the timeline of switching of the default PL-RS. In other words, the timing of switching from the previous spatial relation to the target TCI state may be the same as the timing of switching from the previous PL-RS to the target TCI state.

The UE may calculate switching time of the default PL-RS and switching time of the default spatial relation, and may use the longer switching time out of the two calculated switching times as the switching time of both of the default PL-RS and the default spatial relation. The switching time may be time from reception of the MAC CE for updating the TCI state to switching of at least one of the default spatial relation and the default PL-RS, may be time from ACK transmission for the MAC CE to switching of at least one of the default spatial relation and the default PL-RS, or may be time from 3 ms after ACK transmission for the MAC CE to switching of at least one of the default spatial relation and the default PL-RS.

According to timeline 1, the default spatial relation and the default PL-RS can be invariably made the same, and the UE can thus appropriately calculate transmit power.

### {Timeline 2}

The timeline of switching of the default spatial relation may be different from the timeline of switching of the default PL-RS. The switching time of the default spatial relation may be shorter than the switching time of the default PL-RS. For example, the UE may switch the default spatial relation to the target TCI state after the elapse of 3 ms since the ACK transmission for the MAC CE for updating the TCI state, and switch the default PL-RS to the target TCI state afterwards.

According to timeline 2, the switching time of the default spatial relation (the UL transmit beam) can be made shorter.

### <Second Embodiment>

If the application condition is satisfied, and the TCI state of the specific DL signal is updated by the MAC CE, at least one of the default spatial relation and the default PL-RS may be switched to the TCI state in accordance with a specific timeline.

When the TCI state (the target TCI state) indicated by the MAC CE (an activation command) is known, the UE may switch the TCI state for reception of the specific DL signal to the target TCI state after the elapse of 3 ms since ACK transmission for the PDSCH carrying the MAC CE (DL switching timing). In the specific timeline, the UE may switch at least one of the default spatial relation and the default PL-RS of the specific UL signal to the target TCI state after the elapse of 3 ms + offset since the ACK transmission (UL switching timing). In the present disclosure, an offset and a time offset may be interchangeably interpreted.

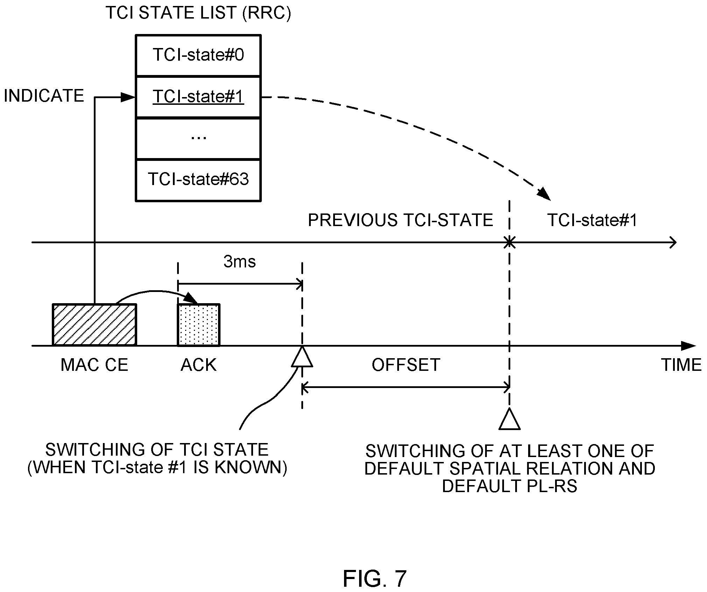

For example, as shown in FIG. 7, when the MAC CE activates TCI state #1, and TCI state #1 is known, the UE switches the TCI state for the specific DL signal to TCI state #1 at timing after the elapse of 3 ms since ACK transmission for the MAC CE, and switches at least one of the default spatial relation and the default PL-RS of the specific UL signal to TCI state #1 after the elapse of an offset time since the timing.

According to the second embodiment, even when the TCI state is updated by the MAC CE, the UE can appropriately switch at least one of the default spatial relation and the default PL-RS.

### <Third Embodiment>

The offset according to the second embodiment may be configured by an RRC parameter, may be defined in a specification, or may be a value reported by UE capability information. The offset may be any one of the following offsets 1 to 5.

### [Offset 1]

0 (zero). The switching timing of at least one of the default spatial relation and the default PL-RS may be after the elapse of 3 ms since ACK transmission for the MAC CE (may be the switching timing of the TCI state when the target TCI state is known). The UL switching timing may be the same as the DL switching timing.

### [Offset 2]

x [ms] or x [slot]. x may be defined in a specification, or may be configured by an RRC parameter. x may depend on a subcarrier spacing (SCS) or a slot length.

### [Offset 3]

Offset for switching the spatial relation based on the MAC CE. The offset may be defined in a specification, or may be configured by an RRC parameter. For example, when the target TCI state is known, the offset may be TOₖ * (T_{first-SSB} + T_{SSB-proc}). When the target TCI state is unknown, the offset may be T_{L1-RSRP} + TOᵤₖ * (T_{first-SSB} + T_{SSB-proc}).

### [Offset 4]

Time necessary for TCI state switching when the target TCI state is unknown. For example, the offset may be time based on time T_{L1-RSRP} for L1-RSRP measurement, or may be T_{L1-RSRP} + TOᵤₖ * (T_{first-SSB} + T_{SSB-proc}). For example, the offset may be time based on time T_{L1-SINR} for L1-SINR measurement, or may be T_{L1-SINR} + TOᵤₖ * (T_{first-SSB} + T_{SSB-proc}).

### [Offset 5]

Time taken before the target TCI state becomes known from being unknown. For example, the offset may be time based on time T_{L1-RSRP} for L1-RSRP measurement, or may be T_{L1-RSRP}. For example, the offset may be time based on time T_{L1-SINR} for L1-SINR measurement, or may be T_{L1-SINR}.

According to the third embodiment, the UE can switch at least one of the default spatial relation and the default PL-RS at appropriate timing.

### <Fourth Embodiment>

The offset according to the third embodiment may depend on a type of parameter (reference parameter) referred to by at least one of the default spatial relation and the default PL-RS. In the present disclosure, a reference parameter, a TCI state or QCL assumption, a pre-update reference parameter, an updated reference parameter, and a target TCI state may be interchangeably interpreted.

The offset may depend on at least one of the following types 1 and 2 of the reference parameter.

### [Type 1]

The offset depends on whether the reference parameter is a TCI state for the PDCCH (CORESET), or a TCI state for the PDSCH. The offset when the reference parameter is a TCI state for the PDCCH and the offset when the reference parameter is a TCI state for the PDSCH may be different from each other.

The offset may depend on whether or not the CORESET is configured in the active DL BWP on the CC. The offset when the CORESET is configured in the active DL BWP on the CC and the offset when the CORESET is not configured in the active DL BWP on the CC may be different from each other. When the CORESET is configured in the active DL BWP on the CC, the reference parameter is the TCI state for the PDCCH. When the CORESET is not configured in the active DL BWP on the CC, the reference parameter is the TCI state for the PDSCH.

### [Type 2]

When the reference parameter is the TCI state for the PDCCH (CORESET) (when the CORESET is configured in the active DL BWP on the CC), the offset depends on whether the reference parameter is the TCI state or the QCL assumption. The offset when the reference parameter is the TCI state for the PDCCH and the offset when the reference parameter is the TCI state for the PDSCH may be different from each other. When the TCI state is configured for the CORESET, the UE uses the TCI state for reception of the PDCCH. When the TCI state is not configured for the CORESET, the UE assumes that the SSB corresponding to a random access channel (RACH) transmission occasion (SSB identified by the UE during the initial access procedure) is QCLed with a DM-RS antenna port associated with PDCCH reception, and uses the QCL assumption for PDCCH reception.

According to the fourth embodiment, the UE can use an appropriate offset, depending on the RS referred to by at least one of the default spatial relation and the default PL-RS.

### <Fifth Embodiment>

The offset according to the third embodiment may have any one of the following relationships 1 and 2 depending on whether the target TCI state is known or unknown.

### [Relationship 1]

The offset depends on whether the target TCI state is known or unknown. Different offsets may be used between when the target TCI state is known and the target TCI state is unknown.

When the target TCI state is known, out of two different offsets, the shorter offset (for example, 0) may be used. When the target TCI state is unknown, out of two different offsets, the longer offset (for example, larger than 0) may be used. The longer offset may be offset 4 according to the third embodiment, or may be offset 5 according to the third embodiment.

### [Relationship 2]

The offset does not depend on whether the target TCI state is known or unknown. The same offset may be used between when the target TCI state is known and the target TCI state is unknown. The UE may determine the receive beam/transmit beam, based on the unknown TCI state (may determine/measure the RS of the QCL type D).

According to the fifth embodiment, regardless of whether the RS referred to by at least one of the default spatial relation and the default PL-RS is known or unknown, the UE can use an appropriate offset.

### <Sixth Embodiment>

The UE may perform any one of the following operations 1 and 2 in a period corresponding to the offset according to the second embodiment. The period corresponding to the offset may start at or after the elapse of 3 ms since ACK transmission for the MAC CE, and have a length of the offset.

### [Operation 1]

The UE applies/assumes pre-update spatial relation and transmits the specific UL signal.

### [Operation 2]

The UE applies/assumes updated spatial relation and transmits the specific UL signal. In the period corresponding to the offset, a performance requirement may be eased. For example, the performance requirement may be defined by at least one of a required SNR and a required error rate.

According to the sixth embodiment, the UE can appropriately operate in switching of the TCI state.

### <Seventh Embodiment>

When the MAC CE for the TCI state referred to by at least one of the default spatial relation and the default PL-RS activates/updates the target TCI state, and the target TCI state is known, the UE may count the L1-RSRP measurement samples after the elapse of 3 ms since ACK transmission for the MAC CE, and switch at least one of the default spatial relation and the default PL-RS to the target TCI state in the next slot of the N-th sample.

In the present disclosure, N may be defined in a specification, may be configured by an RRC parameter, or may be a value reported by UE capability information. For example, N may be 5.

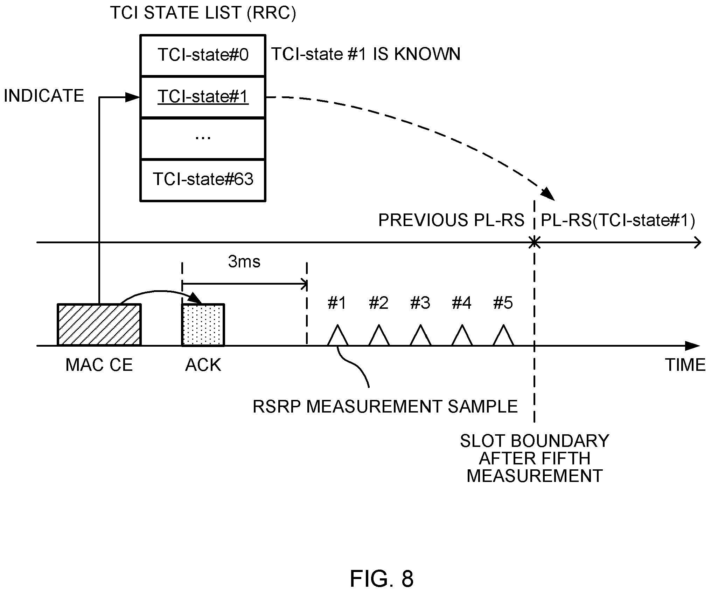

For example, as shown in FIG. 8, when the MAC CE for the TCI state referred to by the default PL-RS activates TCI state #1, and TCI state #1 is known, the UE may use TCI state #1 for the PL-RS in the next slot of the fifth L1-RSRP measurement after the elapse of 3 ms since ACK transmission for the MAC CE.

When the MAC CE for the TCI state referred to by at least one of the default spatial relation and the default PL-RS activates/updates the target TCI state, and the target TCI state is unknown, the UE may count the L1-RSRP measurement samples from timing when the target TCI state becomes known (satisfies a known condition for the TCI), and switch at least one of the default spatial relation and the default PL-RS to the target TCI state in the next slot of the N-th sample.

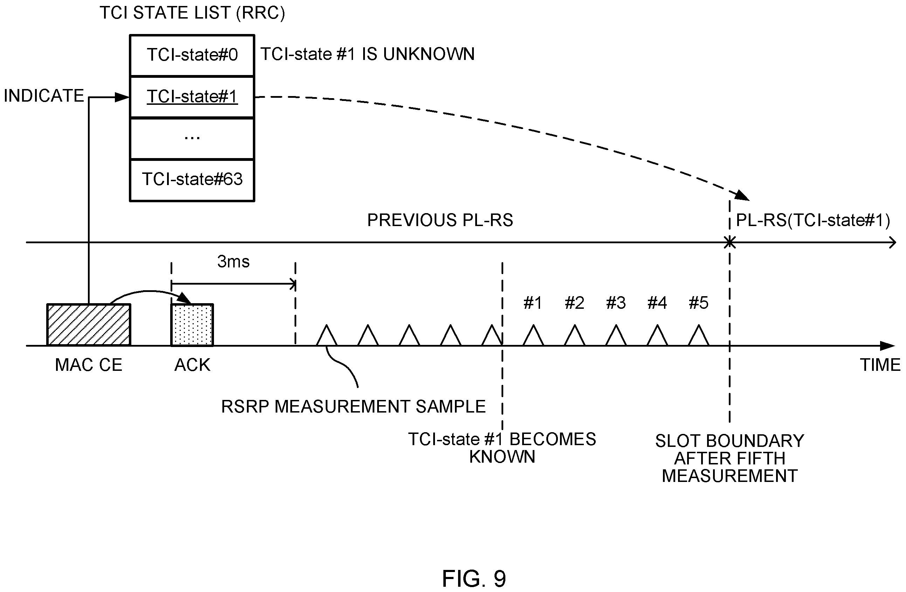

For example, as shown in FIG. 9, when the MAC CE for the TCI state referred to by the default PL-RS activates TCI state #1, and TCI state #1 is unknown, the UE may use TCI state #1 for the PL-RS in the next slot of the fifth L1-RSRP measurement from timing when TCI state #1 becomes known.

If the MAC CE for the TCI state referred to by at least one of the default spatial relation and the default PL-RS activates/updates the target TCI state, and the target TCI state is unknown, the receive beam is not measured yet, and thus it is preferable that the UE switch to the target TCI state after waiting for time for the measurement.

As an additional restriction for a case in which the target TCI state (activated/updated TCI state) is known, when the target TCI state is unknown, additional application time of T_{L1-RSRP} may be assumed before N measurement samples. As an additional restriction for a case in which the target TCI state is known, when the target TCI state is unknown, additional application time of T_{L1-RSRP} may be assumed after N measurement samples.

When both of the spatial relation/the PL-RS are configured in FR2, and the TCI state used for the default spatial relation/the default PL-RS is activated/updated by the MAC CE, application timing for the higher layer filtered RSRP of path loss measurement for the default PL-RS of the PUCCH/SRS/PUSCH after the MAC CE is defined. A filtered RSRP value for a previous PL-RS is used before the application timing. When the TCI state of the default PL-RS is known, the application timing is the next slot after the fifth measurement sample. Here, the first measurement sample corresponds to a first instance after the elapse of 3 ms since transmission of an ACK for the MAC CE. When the TCI state of the default PL-RS is unknown, additional application time of T_{L1-RSRP} may be assumed before five measurement samples.

When the MAC CE for the TCI state referred to by at least one of the default spatial relation and the default PL-RS activates/updates the target TCI state, and the target TCI state is unknown, the UE may count the L1-RSRP measurement samples after the elapse of T_{L1-RSRP} after the elapse of 3 ms since ACK transmission for the MAC CE (after the elapse of 3 ms + T_{L1-RSRP} since ACK transmission), and switch at least one of the default spatial relation and the default PL-RS to the target TCI state in the next slot of the N-th sample. Instead of T_{L1-RSRP}, the time T_{L1-SINR} for L1-SINR measurement may be used, or any one of offsets 1 to 5 according to the third embodiment may be used.

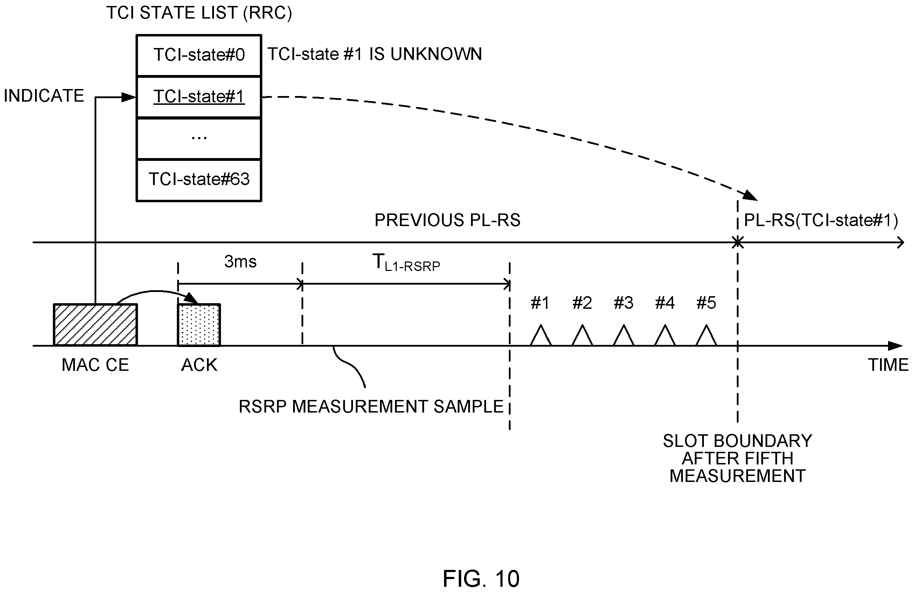

For example, as shown in FIG. 10, when the MAC CE for the TCI state referred to by the default PL-RS activates TCI state #1, and TCI state #1 is unknown, the UE may use TCI state #1 for the PL-RS in the next slot of the fifth L1-RSRP measurement after the elapse of 3 ms + T_{L1-RSRP} since ACK transmission for the MAC CE.

When the MAC CE for the TCI state referred to by at least one of the default spatial relation and the default PL-RS activates/updates the target TCI state, and the target TCI state is unknown, the UE may count the L1-RSRP measurement samples after the elapse of 3 ms since ACK transmission for the MAC CE, and switch at least one of the default spatial relation and the default PL-RS to the target TCI state in the next slot after the elapse of T_{L1-RSRP} since measurement of the N-th sample. Instead of T_{L1-RSRP}, the time T_{L1-SINR} for L1-SINR measurement may be used, or any one of offsets 1 to 5 according to the third embodiment may be used.

According to the seventh embodiment, the UE can switch the default PL-RS at appropriate timing.

### <Eighth Embodiment>

As shown in FIG. 6, when the PL-RS list is configured by an RRC parameter, and a PL-RS (target PL-RS) different from the PL-RS (previous PL-RS) used for path loss calculation is activated by the MAC CE, the UE may switch the PL-RS using a timeline similar to that of the seventh embodiment.

When the PL-RS different from the previous PL-RS is activated by the MAC CE, and the TCI state of the activated PL-RS is known, the UE may count the L1-RSRP measurement samples after the elapse of 3 ms since ACK transmission for the MAC CE, and switch the previous PL-RS to the activated PL-RS in the next slot of the N-th sample.

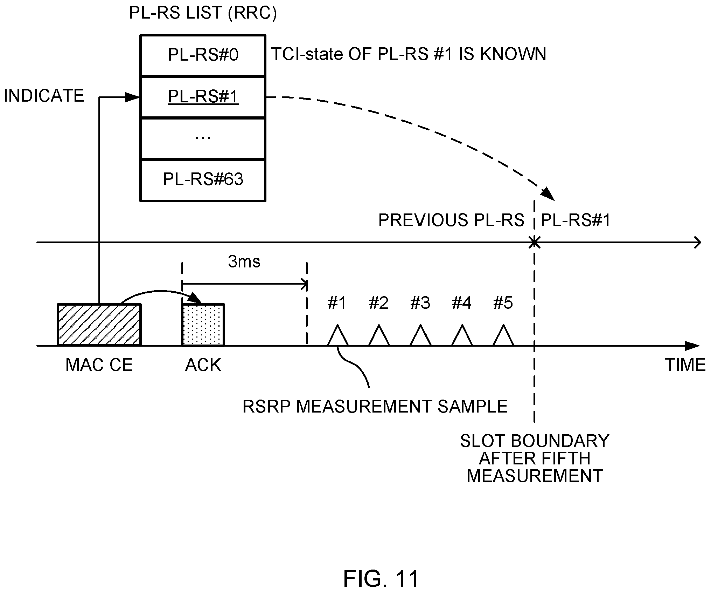

For example, as shown in FIG. 11, when the MAC CE activates PL-RS #1 different from the previous PL-RS, and the TCI state of PL-RS #1 is known, the UE may switch from the previous PL-RS to PL-RS #1 in the next slot of the fifth L1-RSRP measurement after the elapse of 3 ms since ACK transmission for the MAC CE.

When the target PL-RS different from the previous PL-RS is activated/updated by the MAC CE, and the TCI state of the target PL-RS is unknown, the UE may count the L1-RSRP measurement samples from timing when the TCI state of the target PL-RS becomes known (satisfies a known condition for the TCI), and switch the previous PL-RS to the target PL-RS in the next slot of the N-th sample.

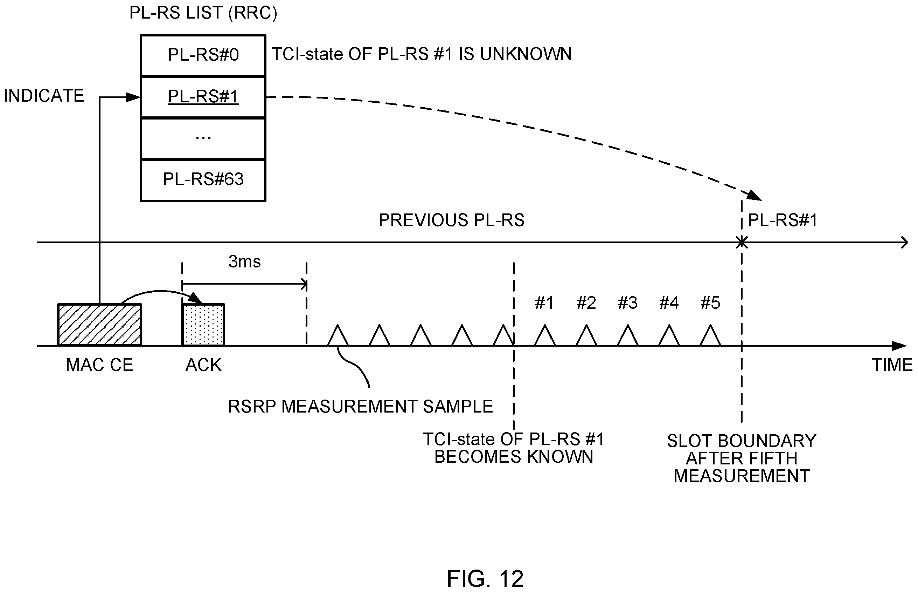

For example, as shown in FIG. 12, when the MAC CE activates PL-RS #1 different from the previous PL-RS, and the TCI state of PL-RS #1 is unknown, the UE may switch from the previous PL-RS to PL-RS #1 in the next slot of the fifth L1-RSRP measurement from timing when the TCI state of PL-RS #1 becomes known.

When the target PL-RS different from the previous PL-RS is activated/updated by the MAC CE, and the TCI state of the target PL-RS is unknown, the UE does not measure the receive beam, and thus it is preferable that the UE switch the PL-RS after waiting for time for the measurement.

As an additional restriction for a case in which the TCI state of the target PL-RS (activated/updated PL-RS) is known, when the TCI state of the target PL-RS is unknown, additional application time of T_{L1-RSRP} may be assumed before N measurement samples. As an additional restriction for a case in which the TCI state of the target PL-RS is known, when the TCI state of the target PL-RS is unknown, additional application time of T_{L1-RSRP} may be assumed after N measurement samples.

When the target PL-RS different from the previous PL-RS is activated/updated by the MAC CE, and the TCI state of the target PL-RS is unknown, the UE may count the L1-RSRP measurement samples after the elapse of T_{L1-RSRP} after the elapse of 3 ms since ACK transmission for the MAC CE (after the elapse of 3 ms + T_{L1-RSRP} since ACK transmission), and switch the previous PL-RS to the target PL-RS in the next slot of the N-th sample. Instead of T_{L1-RSRP}, the time T_{L1-SINR} for L1-SINR measurement may be used, or any one of offsets 1 to 5 according to the third embodiment may be used.

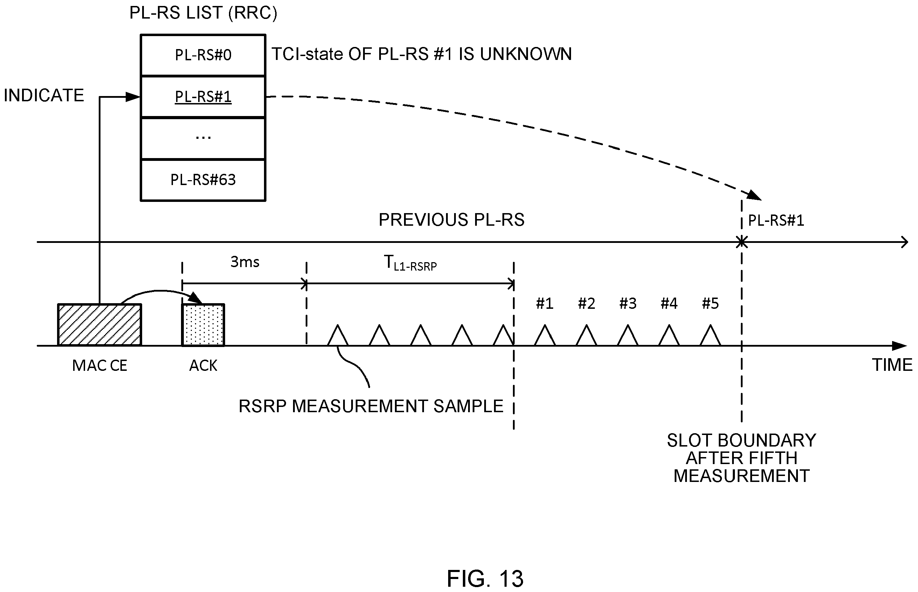

For example, as shown in FIG. 13, when the MAC CE for the TCI state referred to by the default PL-RS activates PL-RS #1, and the TCI state of PL-RS #1 is unknown, the UE may switch from the previous PL-RS to PL-RS #1 in the next slot of the fifth L1-RSRP measurement after the elapse of 3 ms + T_{L1-RSRP} since ACK transmission for the MAC CE.

When the target PL-RS different from the previous PL-RS is activated/updated by the MAC CE, and the TCI state of the target PL-RS is unknown, the UE may count the L1-RSRP measurement sample after the elapse of 3 ms since ACK transmission for the MAC CE, and switch the previous PL-RS to the target PL-RS in the next slot after the elapse of T_{L1-RSRP} since measurement of the N-th sample. Instead of T_{L1-RSRP}, the time T_{L1-SINR} for L1-SINR measurement may be used, or any one of offsets 1 to 5 according to the third embodiment may be used.

According to the eighth embodiment, the UE can switch the PL-RS at appropriate timing.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

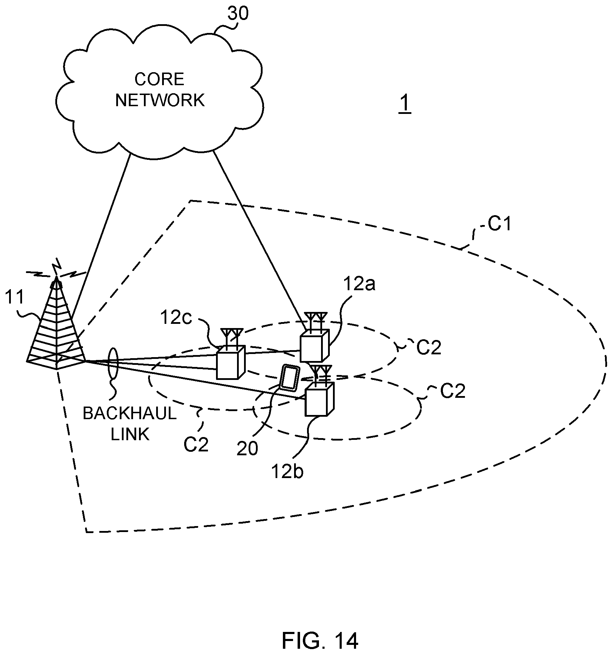

FIG. 14 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

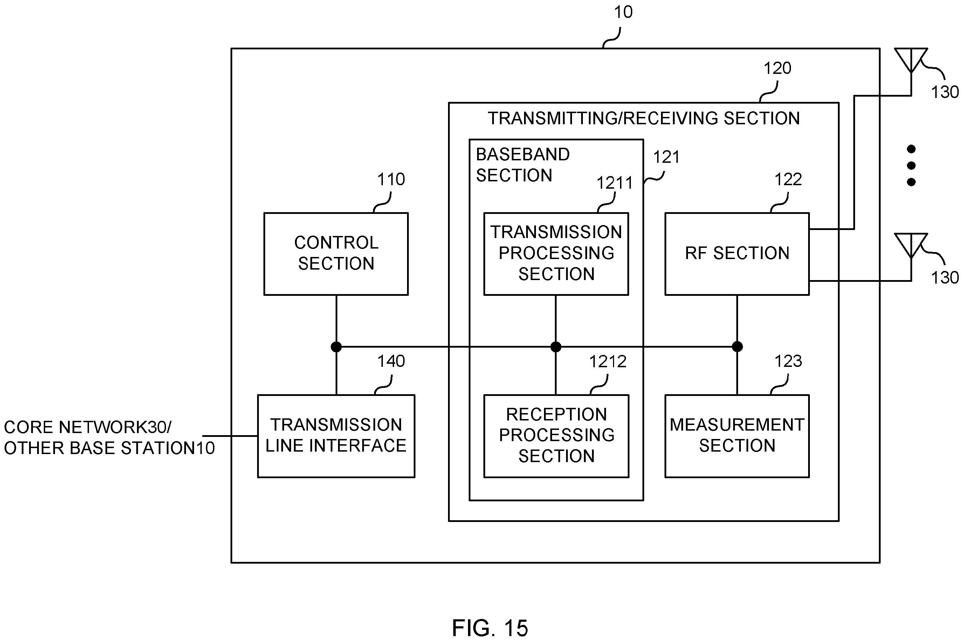

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a medium access control-control element (MAC CE) indicating a transmission configuration indication (TCI) state. When a specific uplink signal satisfies an application condition, the transmitting/receiving section 120 may receive the specific uplink signal transmitted using the TCI state and spatial relation at or after timing later than positive acknowledgement (ACK) transmission for the MAC CE.

The transmitting/receiving section 120 may transmit a medium access control-control element (MAC CE) indicating a transmission configuration indication (TCI) state or a reference signal of a path loss reference signal (PL-RS). When a specific uplink signal satisfies an application condition, the transmitting/receiving section 120 may receive the specific uplink signal transmitted using the reference signal for path loss calculation at or after timing later than positive acknowledgement (ACK) transmission for the MAC CE.

### (User Terminal)

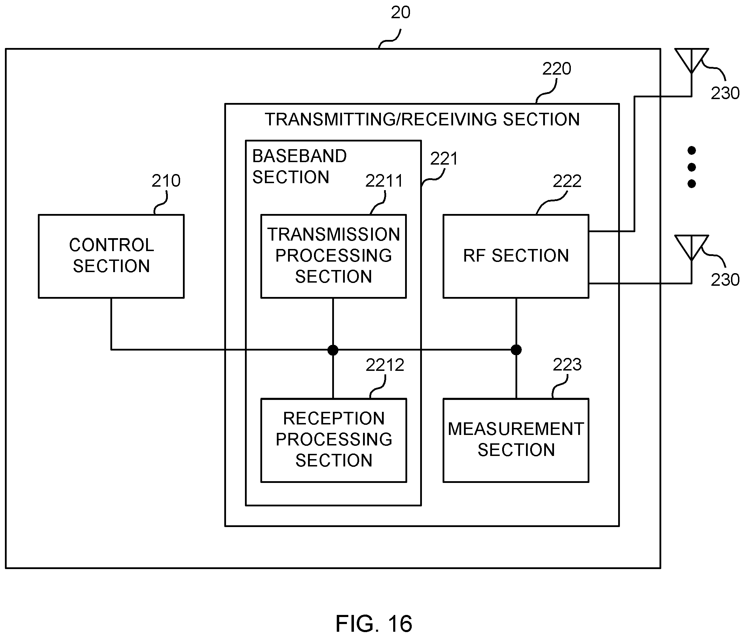

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a medium access control-control element (MAC CE) indicating a transmission configuration indication (TCI) state. When a specific uplink signal satisfies an application condition, the control section 210 may use the TCI state for spatial relation (for example, at least one of default spatial relation and a default PL-RS) of the specific uplink signal at timing (for example, UL switching timing) later than positive acknowledgement (ACK) transmission for the MAC CE.

The timing may be after an elapse of 3 ms + time offset since the ACK transmission.

The time offset when the TCI state is configured for a physical downlink control channel and the time offset when the TCI state is configured for a physical downlink shared channel may be different from each other.

The offset when the TCI state satisfies a condition for the TCI state to be considered known and the offset when the TCI state does not satisfy the condition may be different from each other.

The transmitting/receiving section 220 may receive a medium access control-control element (MAC CE) indicating a transmission configuration indication (TCI) state or a reference signal of a path loss reference signal (PL-RS). When a specific uplink signal satisfies an application condition, the control section 210 may use the reference signal for path loss calculation of the specific uplink signal at timing later than positive acknowledgement (ACK) transmission for the MAC CE.

When the reference signal is unknown, the timing may be a slot after N-th (for example, fifth) measurement after an elapse of 3 ms and time for measurement since the ACK transmission.

The measurement may be layer 1 reference signal received power (L1-RSRP) measurement.

The measurement may be layer 1 signal to interference noise ratio (L1-SINR) measurement.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

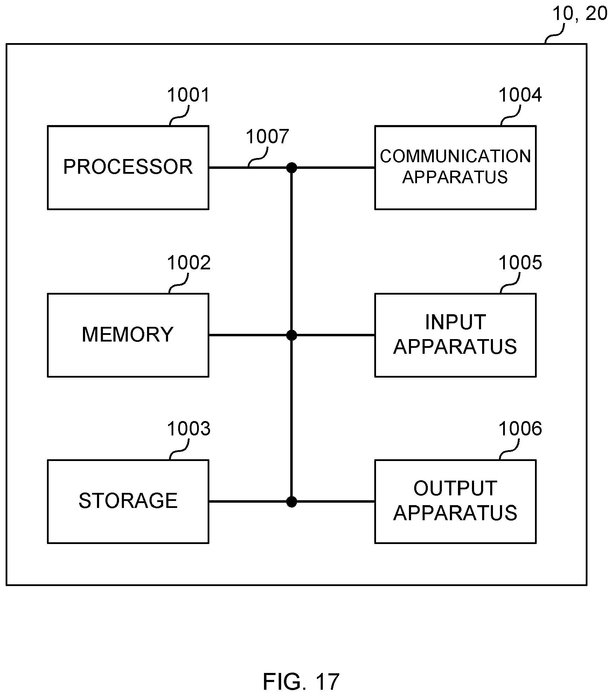

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight), " "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a medium access control-control element (MAC CE) indicating a transmission configuration indication (TCI) state or a reference signal of a path loss reference signal (PL-RS); and
a control section that, when a specific uplink signal satisfies an application condition, uses the reference signal for path loss calculation of the specific uplink signal at timing later than positive acknowledgement (ACK) transmission for the MAC CE.

2. The terminal according to claim 1, wherein
when the reference signal is unknown, the timing is a slot after N-th measurement after an elapse of 3 ms and time for measurement since the ACK transmission.

3. The terminal according to claim 2, wherein
the measurement is layer 1 reference signal received power (L1-RSRP) measurement.

4. The terminal according to claim 2, wherein
the measurement is layer 1 signal to interference noise ratio (L1-SINR) measurement.

5. A radio communication method for a terminal, the radio communication method comprising:
receiving a medium access control-control element (MAC CE) indicating a transmission configuration indication (TCI) state or a reference signal of a path loss reference signal (PL-RS); and
when a specific uplink signal satisfies an application condition, using the reference signal for path loss calculation of the specific uplink signal at timing later than positive acknowledgement (ACK) transmission for the MAC CE.

6. A base station comprising:
a transmitting section that transmits a medium access control-control element (MAC CE) indicating a transmission configuration indication (TCI) state or a reference signal of a path loss reference signal (PL-RS); and
a receiving section that, when a specific uplink signal satisfies an application condition, receives the specific uplink signal transmitted using the reference signal for path loss calculation at or after timing later than positive acknowledgement (ACK) transmission for the MAC CE.
